# EUROPÄISCHE PATENTANMELDUNG

(11) **EP 2 402 830 A1**
(43) Veröffentlichungstag der Anmeldung: **04.01.2012**
(21) Anmeldenummer: 10168360.5
(22) Anmeldetag: 02.07.2010
(51) Int. Cl.: G05B 19/042, G01G 3/14, G01L 1/22, H04B 3/54, G06F 13/42, A61N 1/372

(54) **Erfindung betreffend Mess- und Ansteuerungssystem für eine Vielzahl von Wandlern**

(71) Anmelder: Technische Universität Darmstadt, 64289 Darmstadt (DE)
(72) Erfinder: Meiss, Dipl.-Ing. Thorsten, 64285, Fürth (DE); Porteboeuf, Thibault, 77340, Pontault-Combault (FR); Rausch, Dipl.-Ing. Jacqueline, 64289, Darmstadt (DE); Rossner, Dipl.-Ing. Tim, 63755, Alzenau (DE); Werthschützky, Prof. Dr.-Ing. Roland, 14523, Kleinmachnow (DE)
(74) Vertreter: Stumpf, Peter

(57) **Zusammenfassung**

Die vorliegende Erfindung betrifft ein neuartiges Mess- und Ansteuerungssystem, umfassend mindestens ein Schnittstellen-IC zur Steuerung und Auswertung mehrerer verteilter Wandler zur Messgrößenerfassung und zur Steuerung von Aktoren unter Reduktion der notwendigen Anzahl elektrischer Leitungen insbesondere für medizinische Mikro-Mess- und Behandlungssysteme sowie für verteilte Strukturuntersuchungen mit einer großen Anzahl von Wandlern.

Das Schnittstellen-IC (300) löst das Problem der elektrische Ansteuerung von mehreren aktiven Komponenten (Aktoren) und die Erfassung analoger Messgrößen von mehreren Messstellen (Sensoren). Derzeitige Messungen erfolgen unter aufwendiger Verkabelung zur Energieversorgung und Signalübertragung von Einzelsensoren. Ziel der vorliegenden Erfindung ist die Bereitstellung einer sehr einfachen, kleinen und kostengünstigen Elektronik zur Energieversorgung und dem zeitlich multiplexten Zugang zu verschiedenen Messstellen, wie Sensoren mit dehnungsempfindlichen Widerständen, Kapazitäten, Induktivitäten und elektrischen Brückenschaltungen sowie zur Umkonfigurierung von Messwandlern, unter Verwendung nur zwei elektrischer Leitung (201) und (202) oder einer Leitung (201) und eines Massekontaktes (205). Es können z.B. auch Wheatstonebrücken über nur zwei Leitungen (201) und (202) versorgt und ausgewertet werden. Die Anzahl der adressierbaren Wandler (353-1 bis 353-k) an dieser einen Leitung (201) ist dabei nicht begrenzt.

## Beschreibung

Die vorliegende Erfindung betrifft ein neuartiges Mess- und Ansteuerungssystem umfassend mindestens ein Schnittstellen-IC zur Steuerung und Auswertung mehrerer verteilter Wandler zur Messgrößenerfassung und zur Steuerung von Aktoren unter Reduktion der notwendigen Anzahl elektrischer Leitungen insbesondere für medizinische Mikro-Mess- und Behandlungssysteme sowie für verteilte Strukturuntersuchungen mit einer großen Anzahl von Wandlern.

### Beschreibung

### Stand der Technik

Im Stand der Technik sind zahlreiche Bussysteme bekannt mit denen Signale über elektrische Leiter übertragen werden können. Ein Beispiel für ein 1-Draht-Interface (1-Wire) Kommunikationsprotokoll ist die Architektur von Dallas Electronics nach Patentschrift US 5,210,846. Hierbei werden Daten über eine einzelne Leitung an den Chip hin und vom Chip wieder zurück über ein serielles Protokoll geschickt. Die Referenzspannung erfolgt über einen zusätzlichen Massekontakt (205) am Chip und an der zweiten kommunizierenden Einheit. Es sind für die Kommunikation also insgesamt zwei elektrische Verbindungen notwendig. Nachteilig bei dieser Technologie ist, dass zusätzlich eine Energieversorgung der Chips erfolgen muss. Damit sind zur Versorgung von Sensoren ohne interne Energiespeicher oder interne Energiegewinnung mindestens drei elektrische Leitungen notwendig.

Weiterhin sind Sensoren bekannt, die integrierte aktive elektronische Komponenten aufweisen, die direkt Messgrößen erfassen und digital übertragen. Hierzu sind beispielsweise die Druckmesselemente der Fraunhofergesellschaft IMS zu nennen. Es ist hier möglich, die Messgröße auf dem Chip zu digitalisieren und über eine Drahtleitung oder sogar drahtlos zu senden. Der Aufwand für eine Digitalisierung auf dem Chip ist allerdings enorm und benötigt eine relativ große Fläche auf dem Chip, was wiederum erhöhte Kosten verursacht und einer Miniaturisierung im Wege steht. Weiterhin müssen die Druckmesselemente von mechanischen Spannungen gut entkoppelt werden, da die analog-zu-digital Wandlung auf dem Chip erfolgt. Hier führen durch mechanische Spannungen induzierte unterschiedliche Beweglichkeiten der Ladungsträger zu unterschiedlichen Eigenschaften der Analogelektronik, wodurch eine exakte Messung schwierig wird. Diese Chips sind damit nicht ohne Weiteres in rauen Umgebungen einsetzbar, bei denen mechanische Spannungen in den Chip eingekoppelt werden, beispielsweise in der Spannungsanalyse, Kraftmessung, et cetera.

Die Versorgung von Sensoren an mehreren, verteilten Messstellen über eine elektrische Leitung und einen Massekontakt beschreibt die Offenlegungsschrift EP 2 063 403 A1. Hierbei werden die einzelnen Messstellen mit passiven elektrischen Komponenten von den zwei elektrischen Verbindungen getrennt. In Abhängigkeit von der anliegenden Spannung kann auf einzelne Messstellen zugegriffen werden. Die Methoden zum Zugriff sind unterschiedliche Spannungsebenen, wobei die Messstellen passiv über z-Dioden zugeschaltet werden. Weitere Vorschläge sind die Kopplung über Bandpassfilter und ein frequenzselektiver Zugriff auf die Messstellen oder das Ausbilden passiver Resonatoren mit unterschiedlicher Resonanzfrequenz, die von außen mittels eines Frequenzgenerators angeregt werden. Der Vorschlag verfolgt dasselbe Ziel wie die hier vorgeschlagene Lösung, nämlich verschiedenen Messstellen selektiv gesteuert an die zwei Leitungen anzulegen und den jeweiligen Messwert in einer externen Elektronik auszuwerten. Allerdings ist die Ab- und Zukopplung von Messstellen an den Bus mittels passiver elektrischer Elemente, wie in der EP 2 063 403 A1 vorgeschlagen, nur mit begrenzter Selektivität möglich. So weisen technisch realisierbare Bandpässen nur begrenzte Steilheit in Ihrem Frequenzgang auf, wodurch eine gute Entkopplung der Messstellen schwierig wird. Dies ist unter der dem Gesichtspunkt zu betrachten, dass eine Übertragungsleitung nur eine maximale Frequenz übertragen kann, aber dieser nutzbare Frequenzbereich auf die Anzahl der Messstellen aufgeteilt werden muss, so dass für jede Messstelle zur nächsten im Frequenzband noch eine definierte Isolierung erreicht werden kann. Hierbei ist auch zu berücksichtigen, dass für niedrige Frequenzen sehr große passive Bauteile verwendet werden müssen, bei hohen Frequenzen aber die Anforderungen an die Güte der Übertragungsleitung steigen. Eine Integration von passiven Komponenten erfordert viel Platz: Kapazitäten lassen sich auf einem Chip nur mit sehr kleinen Werten und relativ hohem Flächenbedarf integrieren, Induktivitäten sind daneben zusätzlich technisch noch schwieriger zu realisieren.

Dies ist nicht der Fall für die vorgeschlagene Verwendung von z-Dioden und das Zu-und Abschalten der Messstellen über Spannungspegel auf der Leitung. Hier ist aber auch aufgrund von Bauteiltoleranzen die mögliche Anzahl an Spannungspegeln und damit auch die Anzahl verschiedener Messstellen sehr begrenzt, da auch die Spannung auf der Leitung nicht unbegrenzt erhöht werden darf. Weiterhin muss bei dieser Lösung die Auswertung der einzelnen Messstellen bei unterschiedlichen Spannungspegeln erfolgen, was prinzipiell möglich ist, aber zu unterschiedlichen Genauigkeiten in der Messung führt.

Beispielhaft soll die Erfassung der Ausgangsgröße von veränderlichen Widerständen mit dem Messsystem nach Anspruch 1 im Folgenden dargestellt werden. Dabei ist die Anwendung der Erfindung allerdings nicht auf aktive Wandler beschränkt, sondern soll auch die einfacheren passiven Wandler einschließen.

Das Schnittstellen-IC (300) löst das Problem der elektrische Ansteuerung von mehreren aktiven Komponenten (Aktoren) und die Erfassung analoger Messgrößen von mehreren Messstellen mittels (Sensoren). Derzeitige Messungen erfolgen unter aufwendiger Verkabelung zur Energieversorgung und Signalübertragung von Einzelsensoren. Ziel der vorliegenden Erfindung ist die Bereitstellung einer sehr einfachen, kleinen und kostengünstigen Elektronik zur Energieversorgung und dem zeitlich multiplexten Zugang zu verschiedenen Messstellen, wie Sensoren mit dehnungsempfindlichen Widerständen, Kapazitäten, Induktivitäten und elektrischen Brückenschaltungen sowie zur Umkonfigurierung von Messwandlern, unter Verwendung nur zwei elektrischer Leitungen (201) und (202) oder einer Leitung (201) und eines Massekontaktes (205). Es können z.B. auch Wheatstonebrücken über nur zwei Leitungen (201) und (202) versorgt und ausgewertet werden. Die Anzahl der adressierbaren Wandler (353-1 bis 353-k) an dieser einen Leitung (201) ist dabei nicht begrenzt.

Die Messtechnik spielt in allen Bereichen der Gesellschaft eine große Rolle. Beispielsweise sorgt die Prozessmesstechnik für die gleichmäßige Produktion von Gütern der chemischen Industrie, der Lebensmittelindustrie, der Fertigung von Automobilen usw. Besonders in der Untersuchung von technischen Strukturen, beispielsweise beim Test von Flugzeugmustern, nimmt die Erfassung von verteilten Messgrößen eine wichtige Rolle ein. Hier werden in die Tragflächen dehnungsempfindliche Sensoren appliziert, die Aufschluss auf die Dehnungen der Struktur zulassen. Dazu werden zahlreiche Dehnungsmessstreifen (DMS) in Brückenkonfiguration mit einer Versorgungsspannung über zwei elektrische Leitungen versorgt und das Ausgangssignal der Sensoren über mindestens eine weitere, meistens mehr, Signalleitungen zu einer Umschalt- oder einer Auswerteeinheit weitergeführt. Bei der Messung an mehreren Orten ergibt sich so ein relativ großer Verkabelungsaufwand, der mit der Anzahl der Messstellen steigt.

Eine weitere, bevorzugte Anwendung der Erfindung ergibt sich in der Erfassung medizinisch relevanter Parameter in medizinischen Mikroinstrumenten wie Kathetern, Führungsdrähten und Instrumenten der minimal-invasiven Chirurgie und bei interventionellen Eingriffen. Beispielsweise umfasst der derzeitige Stand der Technik die Druckmessung in Führungsdrähten zur Bestimmung des Verengungsgrades von Arterien oder die Messung der Flussgeschwindigkeit des Blutes mittels Ultraschall-Doppler-Verfahren zu demselben Zweck. Neuerdings sind, wenn auch noch im prototypischen Stadium, Führungsdrähte mit integrierter Kraftmessung an der Führungsdrahtspitze, bekannt (WO2008/000246). Hierbei wird der Kraftvektor der Interaktionskraft der Führungsdrahtspitze mit den Arterien und Ablagerungen gemessen, um daraus dem Anwender eine Information über die Kontaktkraft, die Rauhigkeit von Ablagerungen zu vermitteln, und so das Passieren von Stenosen und Verengungen mit dem Führungsdraht zu vereinfachen. Dadurch kann die Komplikationsrate verringert und die Erfolgsrate der Eingriffe erhöht werden. Problematisch bei der Aufnahme eines Kraftvektors ist die Anzahl der elektrischen Leitungen, die für die Energieübertragung zum Sensor hin und der Signalübertragung aus dem Sensor heraus notwendig sind. Jede Kraftkomponente benötigt hier eine i.d.R. mindestens eine weitere Leitung. In dem beschränkten Platzbedarf im Führungsdraht ist die Integration jeder weiteren Leitung eine technische Herausforderung. Ebenso ist der Anschluss jeder weiteren Leitung am Sensor sehr kostspielig.

Zukünftige Entwicklungen werden die Erfassung weiterer Messgrößen in einem kombinierten Sensor erfordern. Hier ist die Versorgung des einen oder mehrerer Sensoren über wenige elektrische Drähte absolut notwendig. Ein Schluss hieraus ist, dass die die Anzahl der notwendigen Leitungen nicht von der Anzahl der Messstellen abhängen soll, um erweiterbare Sensorsysteme zu ermöglichen.

Zu der Übertragung von Sensorsignalen über elektrische Leitungen kann die drahtlose Energie- und Signalübertragung eine Alternative darstellen. Hier ist die Übertragung der notwendigen Energie allerdings problematisch und erfordert in der Regel größere Bereiche am Sensor, in denen elektro-magnetische, magnetische oder elektrische Feldenergie aufgefangen werden kann, um nachfolgend in eine stabile, belastbare Versorgungsspannung gewandelt zu werden. Auch wenn die Technik hier weiter Fortschritte macht, sind die Energiemengen doch physikalisch sehr begrenzt für eine Empfangseinheit mit kleinstem Bauraumbedarf. Weiterhin muss für räumlich verteilte Messstellen für ein großräumig verteiltes Feld gesorgt werden, was aufwendig, teuer und für viele Aufgaben nicht gewünscht ist.

### Aufgabe

Es ist Aufgabe der Erfindung, eine stabile Energieversorgung und gleichzeitig die Signalübertragung über eine Leitung zu realisieren, um damit
sehr kleine Sensoren aufbauen zu können, mit denen mehrere gleichartige oder andersartige Messgrößen erfasst werden können,
diese Sensoren aufgrund der geringen Anzahl der Leitungen kostengünstig kontaktieren und integrieren zu können,
die Anzahl der Sensoren an der Leitung skalierbar zu gestalten, also nicht nur viele Messgrößen eines Sensors an dieser Leitung zu übertragen, sondern auch mehrere Sensoren und mehrere Schnittstellen-ICs an sich an der selben Leitung koordiniert betreiben zu können,
die Verschaltung der Messwandler umkonfigurieren zu können,
eine Schnittstelle mit den eben genannten Eigenschaften für größere oder bekannte Sensoren wie beispielsweise DMS verfügbar zu machen, um Sie adressierbar zu gestalten und den Verkabelungsaufwand zu verringern,
Wheatstonebrücken über nur zwei Leitungen auswerten zu können,
die Schnittstelle so zu gestalten, dass es mittels vorhandener Technologie monolithisch in Sensoren integriert werden kann oder, dass es Kontaktbereiche aufweist, um es mittels einfacher Kontaktierungsverfahren in hybridbauweise auf vorhandene Sensoren auf- oder anbringen zu können,
Die Schnittstelle nicht nur für Sensoren, sondern auch zur Steuerung von Aktoren nutzbar zu gestalten.

Die Messung mechanischer Messgrößen wie Kraft, Druck und Dehnung erfolgt häufig mittels elektromechanischer Wandler, die in der Regel eine analoge Ausgangsgröße liefern. Es kann zwischen aktiven und passiven Wandlern unterschieden werden, in Abhängigkeit davon, ob sie eine Hilfsenergie benötigen oder nicht. Aktive Wandler benötigen eine Hilfsenergie. Hierzu gehören beispielsweise verstimmbare Widerstände wie piezoresistive Wandler und DMS, oder verstimmbare Induktivitäten, Kapazitäten, et cetera. Passive Wandler benötigen keine Hilfsenergie, z.B. piezoelektrische Sensoren, Thermoelemente, elektrodynamische Geschwindigkeitsaufnehmer, und so weiter.

Zur Messung mittels aktiver Sensoren muss also eine elektrische Größe auf den Sensor gekoppelt werden und die elektrische Ausgangsgröße des Sensors gemessen werden. Die Sensorausgangsgröße kann entweder direkt die komplexe elektrische Impedanz der Versorgungsgrößen des Sensors sein, oder aber eine weitere elektrische Größe, z.B. eine weitere Ausgangsspannung einer Brückenanordnung oder Ähnliches.

Wandler, im Speziellen elektromechanischen Wandler, sollen im Folgenden synonym für Sensoren und Aktoren verwendet werden. Es soll aber sich aber nicht nur auf rein elektromechanische Wandler bezogen werden, da bei Wheastonebrücken auch rein elektrische Wandler ausgewertet werden. In einer Ausführungsbeschreibung sollen auch elektrooptische Wandler mit in den Schutzumfang nach Anspruch 1 einbezogen werden.

### Lösung der Aufgabe

Diese Aufgabe wird durch das System mit den Merkmalen des Anspruchs 1 gelöst. Vorteilhafte Ausführungsbeispiele werden im Folgenden beschrieben oder/und sind in den Unteransprüchen beschrieben.

Zur Lösung dieser Probleme wird im Folgenden ein Messsystem mit mindestens einem Schnittstellen-IC beschrieben, welches die genannten Nachteile nicht aufweist. Durch eine Kopplung von analoger externer Auswertung aber digitaler Adressierung der Chips lassen sich Messstellen sehr schnell und besonders selektiv auswählen und umkonfigurieren, die Wandlung in ein ausgewertetes Signal erfolgt aber in einer externen, also nicht auf dem Chip befindlichen Elektronik. Die Anzahl der Messstellen ist beliebig erweiterbar. Es lassen sich in der bevorzugten Ausführung auch vollständige Brückenstrukturen über zwei elektrische Kontakte auswerten, die normalerweise drei oder vier Kontakte benötigen. Die Auslegung ohne Wandlung von analog zu digital in einer externen Steuer. Und Messeinheit ermöglicht kleine, robuste und kostengünstige Schnittstellen-ICs, bei denen sich mechanische Spannungen sich nicht nennenswert auf die Messperformance auswirken.

Nachfolgend wird die Erfindung anhand von Ausführungsbeispielen unter Bezug auf die Zeichnung näher erläutert. Es zeigen:

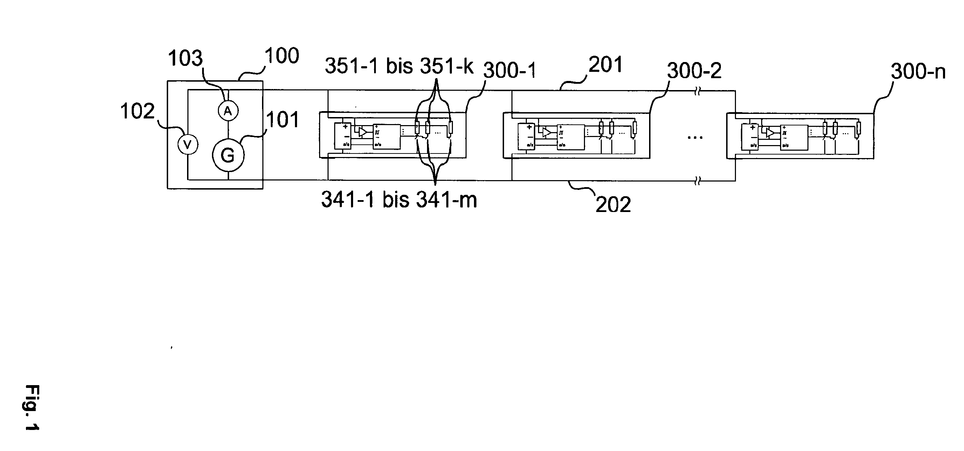

Fig. 1: Schemazeichnung einer ersten Ausführungsform des Systems zur Verwendung der Schnittstellen-ICs (300) nach Anspruch 1. Dargestellt ist die Steuer- und Messeinheit (100), die elektrischen Leitungen (201) und (202) und zahlreichen Schnittstellen-ICs (300-1 bis 300-n) mit wiederum mehreren Wandlern (351-1, 351-2 bis 351-k).

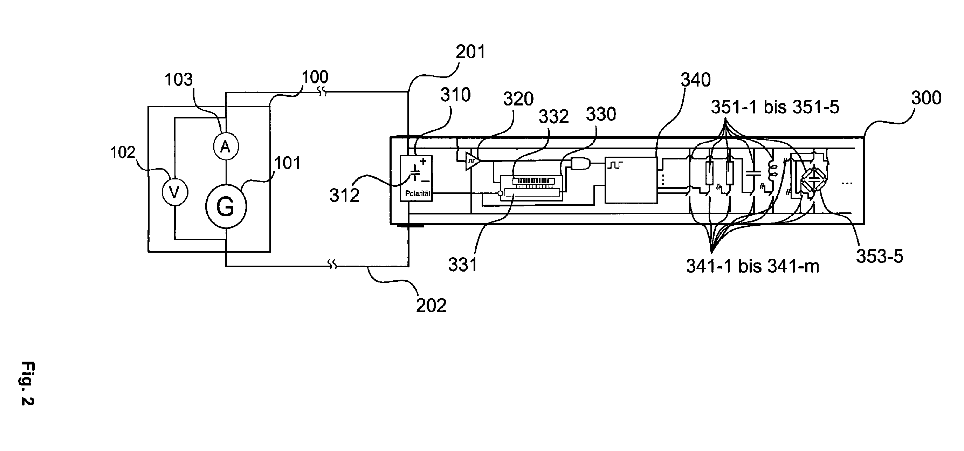

Fig. 2: Schemazeichnung einer beispielhaften Ausführung des Schnittstellen-ICs (300) mit den Funktionsblöcken zur Energieversorgung (310) und Signalextraktion (320) aus den elektrischen Größen, die durch die Steuer- und Messeinheit (110) auf die elektrischen Leitungen (201) und (202) gekoppelt werden, dem Schiebe- oder Zählregister (331) und dem Adress-Vergleichsfeld (332) zur Chipadressierung, dem Schaltregister (340), einigen steuerbaren Schaltern (341-1 bis 341-m) und einigen Wandlern (351-1 bis 351-6).

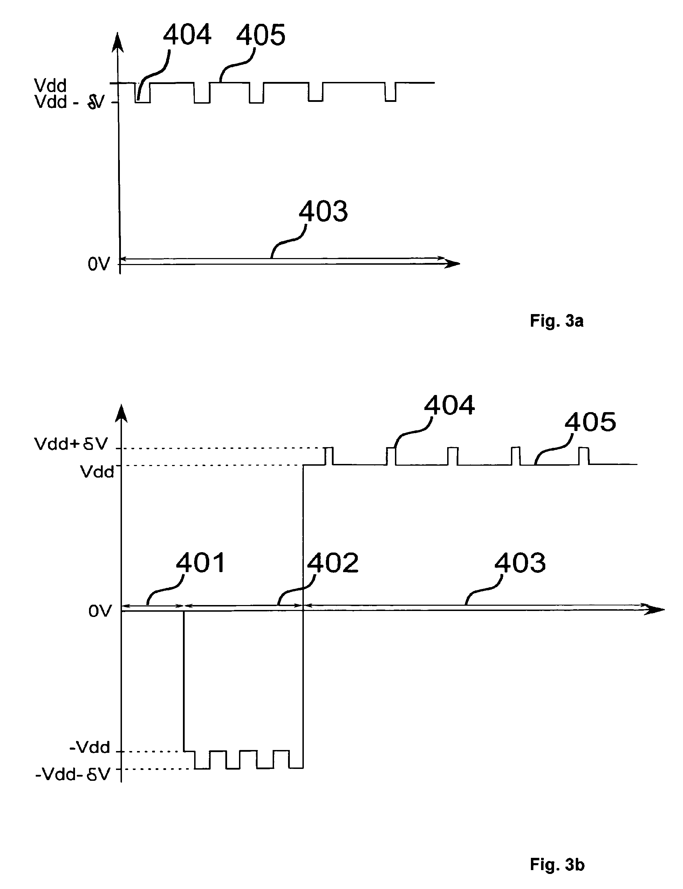

Fig. 3a: Beispielhafter zeitlicher Verlauf Spannungsverlauf zur Steuerung der Schnittstellen-ICs (300-1) bis (300-n) mit verringerter digitaler Steuerspannung δV.
Fig. 3b: Beispielhafter zeitlicher Verlauf Spannungsverlauf zur Steuerung der Schnittstellen-ICs (300-1) bis (300-n) mit erhöhter digitaler Steuerspannung δV, sowie Auswahl des Adressierungsmodus und des Schaltmodus über unterschiedliche Polarität des Signals.

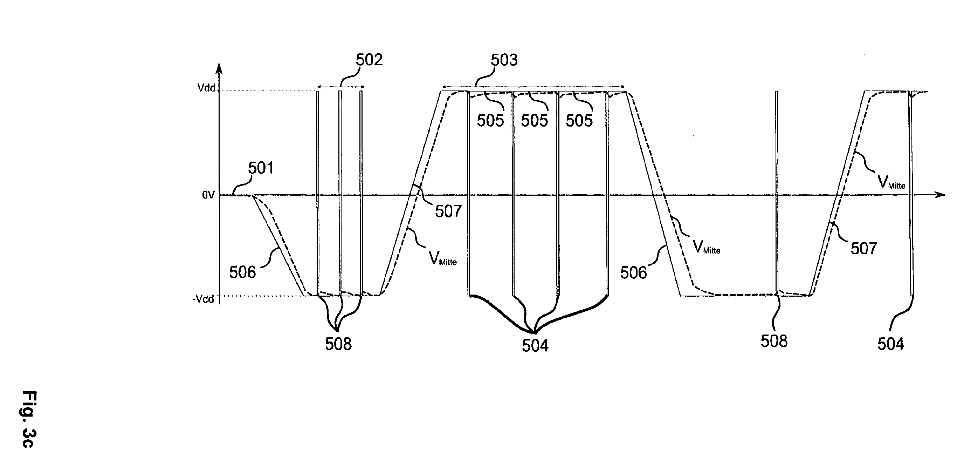

Fig. 3c: Beispielhafter zeitlicher Verlauf Spannungsverlauf zur Steuerung der Schnittstellen-ICs (300-1) bis (300-n) mit digitaler Signalmodulation über Wechsel der Polarität der Versorgungsspannung. Die Interpretation und Weiterverarbeitung des Digitalsignals wird über den Mitlaufenden Mittelwert (V_{Mitte}) verändert.

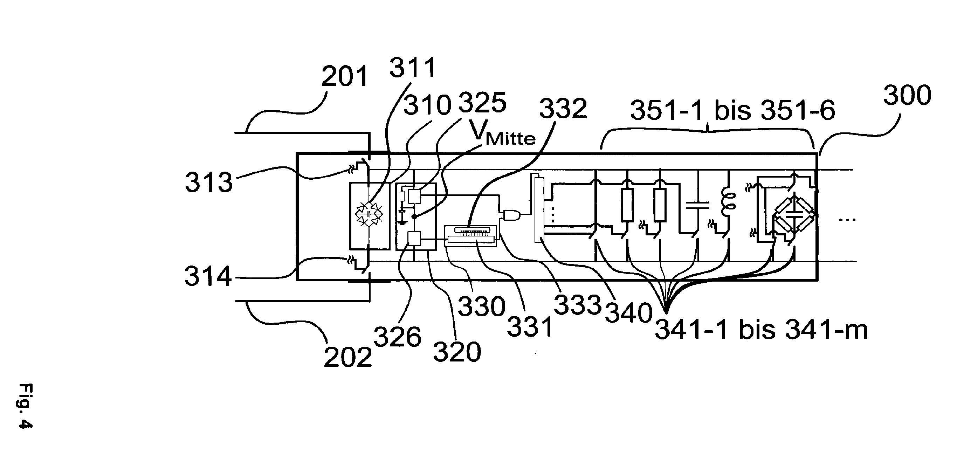

Fig. 4: Schemazeichnung einer beispielhaften alternativen Ausführung des Funktionsblockes der Energieversorgung (310) und Signalgewinnung (320) aus den elektrischen Größen, speziell für die Interpretation und Weiterverarbeitung des Digitalsignals durch Mitlaufenden Mittelwert V_{Mitte}. Die Beispielhafte Auswertung einer Brückenstruktur nach Wandler (553-5) mit vier Anschlüssen über zwei Leiter ist hier schematisch verdeutlicht.

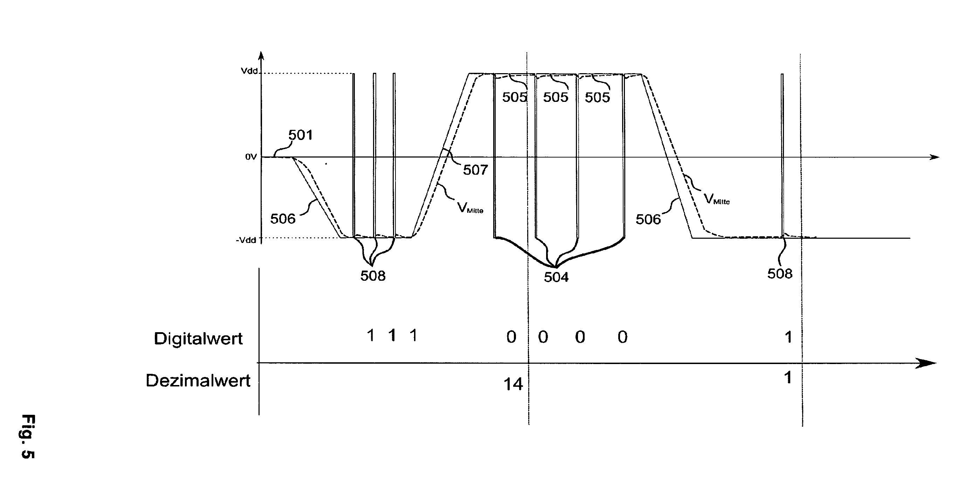

Fig. 5: Beispielhafte Darstellung der Zahlen im dualen System durch Interpretation über Mitlaufenden Mittelwert V_{Mitte}.

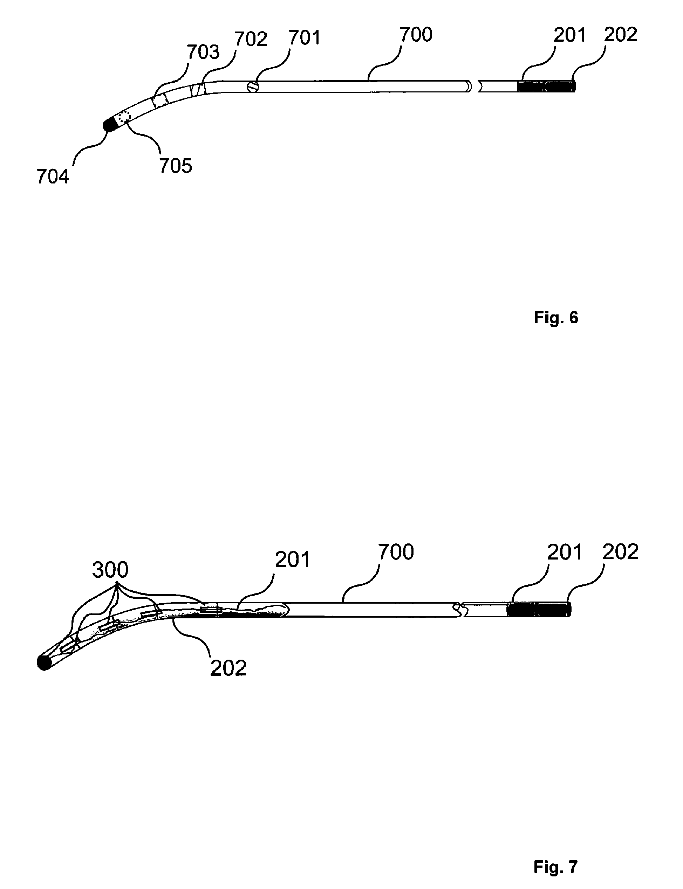

Fig. 6: Führungsdraht (700) mit mehreren Wandlern (701), (702), (703), (704), (705), speziell mit vier Sensoren (701) bis (704) und einem Aktor (705).
Fig. 7: Innerer Anschluss der fünf Wandler (701) bis (705) im Führungsdraht (700) über eine einzelne Leitung (201) und einen Massekontakt (205) mit Hilfe des mehrerer Schnittstellen-ICs (300-1 bis 300-5), wobei die Wandler (701) bis (705) an sich nicht mehr dargestellt sind, sondern durch die Schnittstellen-ICs (300-1 bis 300-5) verdeutlicht werden.

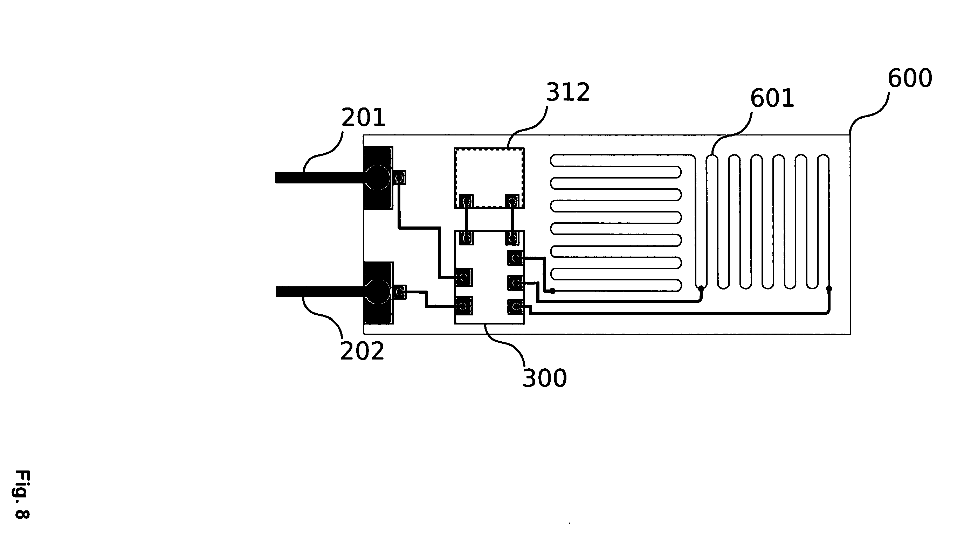

Fig. 8: Konventioneller Dehnmessstreifen (600) zur Verschaltung als Spannungsteiler oder als Teil einer Brückenverschaltung mit Schnittstellen-IC (300) und Komponente zur kurzzeitigen Energiespeicherung (312) in Hybridaufbau. Die notwendigen äußeren elektrischen Leitungskontakte werden im Vergleich zum Stand der Technik von drei auf zwei reduziert.

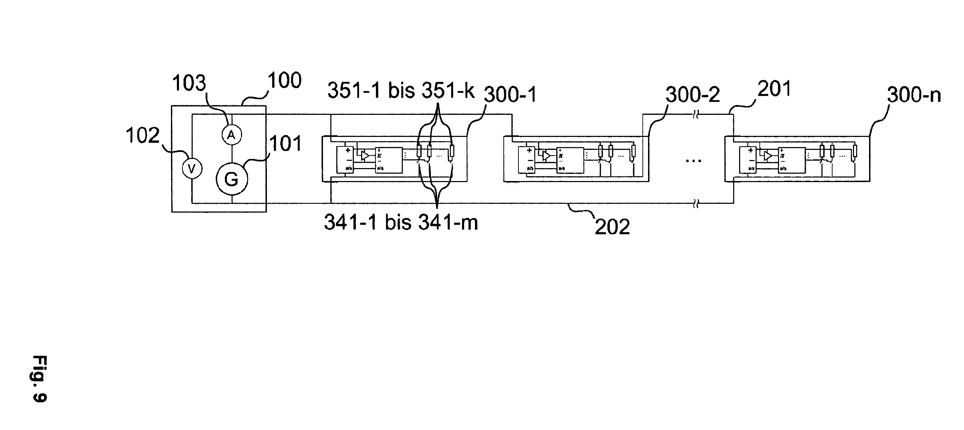

Fig. 9: Kombinierte Reihen- und Parallelschaltung von einer Mess- und Steuereinheit (100) mit mehreren Schnittstellen-IC (300-i).

### Ausführungsbeispiele

Die Figur 1 stellt das Messsystem zur Verwendung des Schnittstellen-ICs (300) nach Anspruch 1 dar. In einer Mess- und Steuereinheit (100) können elektrische Spannungen in einer steuerbaren Quelle (101) erzeugt, und die primären elektrischen Größen über eine Spannungsmessfunktion (102) und einer Strommessfunktion (103) gemessen werden. Vorzugsweise geschieht die Generierung der elektrischen Spannung in der steuerbaren Quelle (101) mithilfe schneller digitaler Systeme mit nachfolgendem Digital-Analogwandler und mit nachfolgendem Verstärker. In der bevorzugten Ausführung erfolgt die Ausgabe der Analogspannungen mit Hilfe einer Ausgangsstufe mit bipolarem Ausgang, welches nach der Messung von Strom und/oder Spannung mittels den Messfunktionen (102) und (103) auf die Leitungen (201) und (202) gekoppelt wird. In der bevorzugten Ausführung kann also die Polarität der Leitungen sehr einfach vertauscht werden, bzw. eine Leitung dient als Masseleitung, die andere kann positive und negative Spannungen tragen. Die steuerbare Quelle (101) kann temporär auch in einen Zustand höchster Impedanz gebracht werden, sodass sie vorübergehend keinen Einfluss auf die Spannungen auf den Leitungen nimmt, und gleichzeitig eine Messung der Spannungspegel zwischen den Leitungen (201) und (202) mittels der Spannungs- (102) und Stromessfunktion (103) durchgeführt werden kann. Die gemessenen bzw. eingestellten Werte von Spannung und Strom und auch deren komplexwertiges Verhältnis können angezeigt, weitergegeben oder gespeichert werden und stellen das Messergebnis oder eine relevante Zwischengröße dar. Über die dargestellten Leitungen (201) und (202) sind mehrere Schnittstellen-ICs (300-1), (300-2) bis (300-n) angeschlossen. Hierbei kennzeichnet n eine ganzzahlige, natürliche Zahl, die je nach Anwendung durchaus Werte über 1000 annehmen kann. Die Mess- und Steuereinheit (100) ist also in der Lage, mehr als 1000 Schnittstellen-ICs (300-1 bis n) zu versorgen und auszuwerten, wodurch eine Messung an verteilten Orten sehr einfach zu realisieren ist.

Dass Mess- und Steuersystem (100) dient der Versorgung, Steuerung und Auswertung des Schnittstellen-ICs (300-1 bis n). Ein Schnittstellen-IC (300) mit mehreren integrierten Messwandlern ist Fig. 2 dargestellt. Der Schnittstellen-IC (300) ist vorzugsweise monolithisch in einem Halbleitermaterial wie z.B. Silizium, Siliziumcarbid oder Gallium-Arsenid oder gedruckter Polymerelektronik, o.ä. hergestellt. Der Chip besitzt einen Funktionsblock Energieversorgungseinheit (310), der die elektrische Spannung auf den Leitungen (201) und (202) für die weiteren Funktionsblöcke auf dem Schnittstellen-IC nutzbar macht. In einer bevorzugten Ausführung beinhaltet die Energieversorgungseinheit (310) einen Funktionsblock Gleichrichtungseinheit (311), der dafür Sorge trägt, dass bei wechselnder Polarität der Leitungsspannungen die Elektronik mit einer Spannung von konstanter Polarität versorgt wird. Weiterhin kann die Energieversorgungseinheit (310) auch einen Energiespeicher für eine kurzzeitige Energiespeicherung (312), wie einen Kondensator, oder einen Tiefpassfilter oder eine aktive Spannungsregelung aufweisen, wodurch Spannungsschwankungen an dem Schnittstellen-IC (300) und an den Wandlern (351-1), (351-2) bis (351-k) ausgeglichen werden können. Auch wenn meist eine monolithische Integration aller Komponenten des Schnittstellen-ICs (300) sinnvoll ist, so kann es bei einzelnen Anwendungen günstiger sein, diese Energiespeicherkomponente (312) als externes Bauteil an den Schnittstellen-IC (300) anzubinden.

Neben der Energieversorgungseinheit (310) weist der Schnittstellen-IC (300) Komponenten zur Gewinnung von digitalen Signalpegeln aus der Differenzspannung der zwei Leitungen (201) und (202) mittels der Signalextraktionseinheit (320) auf. Hierbei stehen mehrere Möglichkeiten der Signalgenerierung in der steuerbaren Quelle (101) und Signalextraktion in der Signalextraktionseinheit (320) zur Verfügung. Weitere Komponenten auf dem Schnittstellen-IC (300) sind das Schiebe- oder Zählregister (331), welches durch digitale Impulse in seinem Wert verändert werden kann. Der Wert des Schiebe- oder Zählregister (331) wird mit dem Wert des Adress-Vergleichsfeldes (332) verglichen. Bei Übereinstimmung der beiden Werte wird durch das Schiebe- oder Zählregister (331) ein Chipselect (333) ausgelöst, welcher die Taktung eines Schaltregisters (340) freigibt, welches dann wiederum durch digitale Impulse in seinem Wert verändert werden kann. Der Ausgang des Schaltregisters (340) ist mit steuerbaren Schaltern (341-1 bis 341-m) verbunden, die wiederum Wandler (351-1 bis 351-k) an die Leitungen (201) und (202) schalten können. Die Funktion Schnittstellen-ICs und des gesamten Systems ergibt sich folgendermaßen.

Es kann beispielsweise der Chip mit einer Spannung konstanter Polarität versorgt und gesteuert werden. Hierbei können auf einen konstanten Versorgungslevel kleine Änderungen moduliert werden, die im Chip aufgenommen und aufbereitet werden. Die Figur 3a stellt hierzu ein Muster des Spannungsverlaufes auf den Leitungen (201) und (202) dar. Beispielsweise kann eine Versorgung des Schnittstellen-ICs (300) und der Wandler (351) mittels Vdd erfolgen. Die Steuersignale werden durch kurze Spannungsänderungen δV übertragen, durch die Signalextraktionseinheit (320) zurück gewonnen und in digitale Signale umgesetzt. Hierbei kann die Spannung zur Übertragung eines digitalen Signals bei gleicher Polarität gegen ein tieferes Spannungsniveau gezogen werden, um 1 Bit zu übertragen, vgl. Fig. 3a . Dies erfordert eine gute Pufferung des Spannungsniveaus, um den Spannungsabfall auf der Leitungen (201) und (202) nicht auf die weitere Elektronik des Schnittstellen-IC (300) zu übertragen.

Eine Alternative stellt ein Spannungsverlauf nach Fig. 3b im Zustand 403 dar, bei dem von einem höheren Spannungsniveau auf eine tieferes bzw. umgekehrt getaktet wird, wobei das tiefere Spannungsniveau immer noch so hoch ist, dass es zur Versorgung der elektrischen Komponenten auf dem Schnittstellen-IC (300) ausreichend ist. Dies reduziert die Notwendigkeit einer Zwischenpufferung der Spannungsversorgung mit einer Energiespeicherkomponente (312), erfordert aber, dass die Auslegung aller weiteren Funktionsblöcke, z.B. (320), (330), (340) und (350) usw., so erfolgt, dass sie auch bei erhöhten Spannungen funktionieren bzw. nicht gestört werden. Alternativ kann eine aktive oder passive Spannungsanpassung auf dem Chip, beispielsweise mittels aktivem Spannungsregler oder einem Tiefpassfilter erfolgen, wobei letztere Möglichkeit wiederum i.d.R. eine Energiespeicherkomponente (312) beinhaltet, die aber in diesem Fall kleiner ausfallen kann als bei der Versorgung und Steuerung nach Fig. 3a. Bei passiver Spannungsregelung kann, im Besonderen dann, wenn die digitalen Spannungsänderungen von einem konstanten Versorgungsniveau auf den Leitungen (201) und (202) zu höheren Spannungen moduliert werden, die passive Energiespeicherkomponente (312) besonders klein ausfallen, wenn die digitale Information nur kurz zu positiver Spannung hin und danach gleich wieder auf das mittlere Versorgungsniveau gebracht wird.

Nachteilig bei diesen genannten Arten der Kommunikation mit konstanter Polarität ist die komplizierte Gewinnung der Information aus der Signalübertragung. Im Stand der Technik wird dieses meist durch eine definierte Übertragungsgeschwindigkeit erreicht, bei dem die digitalen Signale mit einem bestimmten Zeitmaß verglichen werden. Dieses Zeitmaß wird häufig über Oszillatoren auf dem IC bereitgestellt, die mit einer im Verhältnis zur Datenrate stehenden Frequenz schwingen. Dies kann beispielweise durch zeitgenaue Quarzschwinger oder durch Phase-Lock-Loops mit Synchronisation auf den Sendetakt erfolgen. Auch einfache Oszillatoren wären für geringe Performance für den erfindungsgemäßen Schnittstellen-IC (300) nach Anspruch 1 denkbar einsetzbar. Es ist aber problematisch für ein kostengünstiges Schnittstellen-IC diese Komponenten auf kleinstem Raum zu integrieren und unter mechanischer Spannung, die auf dem Schnittstellen-IC auftreten kann, diese Frequenzen stabil zu halten. Ein möglicher Ansatz ist es, einen vom Flächenbedarf günstigen Oszillator auf dem Schnittstellen-IC zu integrieren. Um keine besonderen Maßnahmen zur Kompensation des Einflusses der mechanischen Spannungen auf die Frequenz treffen zu müssen, ist es möglich, den Oszillator auf dem Schnittstellen-IC dazu zu nutzen, von Zeit zu Zeit ein Signal, beispielsweise eine definierten Wechsel der Impedanz auf den Leitungen (201) und (202), zu erzeugen, wodurch auf die Frequenz des Oszillators geschlossen werden kann. Anstatt also die Frequenz auf dem Schnittstellen-IC (300) anzupassen und/oder zu synchronisieren, soll statt dessen ein Takt in der Steuer-und Messeinheit (100) regelmäßig mit der Oszillatorfrequenz auf dem Schnittstellen-IC (300) synchronisiert werden.

Im einfachsten Fall soll die Steuerung der Schnittstellen-ICs (300-1 bis 300-n) aber nicht über digitale Codes im dualen Zahlensystem, sondern über die definierte Abfolge von Pulsen bzw. Spannungsänderungen zur Steuerung der Schnittstellen-ICs (300-1 bis 300-n) erfolgen. Es ist aufgrund der geringeren Dichte der Informationskodierung deshalb sinnvoll, den Adressraum aufzuteilen. Eine bevorzugte, intuitive Lösung ist es, erst den Schnittstellen-IC zu adressieren, vgl. Fig. 3b, Zustand (402), und dann im Zustand (403) die Messstelle am IC zu adressieren, indem beispielsweise die Taktung über leicht erhöhte Spannungsspitzen δV, was durch (404) verdeutlicht wird, erfolgt.

Alternativ ist auch die Möglichkeit gegeben, jedem Schnittstellen-IC einen eigenen Adressraum vorzugeben indem beispielsweise die Wandler (351-1 bis 351k) direkt über ein Schaltregister (340), welches gleichzeitig als Zähl- oder Schieberegister (331) ausgelegt ist, angesteuert werden, ohne eine vorgelagerte Chip-Adressierung und Aktivierung (330) zu benötigen. Der Anschluss des spezifischen Wandlers (351-i) erfolgt dann an einer Ausgangsleitung des Schaltregisters (340), der bei anderen Schnittstellen-ICs (300-2 bis 300-n) nicht belegt / genutzt wird. Um mehrere Schnittstellen-ICs (300) an den selben Leitungen (201) und (202) in dieser Art zu betreiben, muss ein kombiniertes Schalt-, Zähl- und Schieberegister so viele Ausgänge aufweisen, wie Messstellen im Gesamtsystem vorhanden sind. Dies kann bei wenigen Messstellen zu einer sehr einfachen Umsetzung eines Systems nach Anspruch 1 führen. Es wird aber bei einer großen Anzahl von möglichen Messstellen nicht effizient und sehr unflexibel adressiert. Es sollten für zahlreiche Messstellen dann keine einfachen Schiebeoperationen und eine einfache Impulszählung eingesetzt werden, sondern beispielsweise eine Repräsentation der Zahlen im dualen System.

Eine sehr einfache Realisierung der Kommunikation ist in Fig. 3b dargestellt. Hier weist die Energieversorgungseinheit (310) des Schnittstellen-ICs (300), wie schon beschrieben, eine Gleichrichtungseinheit (311) auf. Die Signale selbst werden über die Modulation der Spannungsamplitude δV zwischen den Leitungen (201) und (202) übertragen. Über die Polarität der Spannung kann sehr einfach ein bestimmter Modus ausgewählt werden, in dem die Schnittstellen-ICs (300-1 bis 300-n) arbeiten. Ein beispielhafter Ablauf der Auswertung von Messstellen wird im Folgenden anhand Fig. 3b beschrieben.

Alle Schnittstellen-ICs (300-1 bis 300-n) an den Leitungen (201) und (202) werden durch den Spannungspegel 0V im Zustand 401 in einen Reset-Zustand gebracht. Durch Etablieren einer Differenzspannung -Vdd werden alle Schnittstellen-ICs in einen Adressauswahl-Modus, den Zustand (402) gebracht. Durch Variation der Spannungsamplitude um δV ist es jetzt möglich, in die Schnittstellen-ICs (300) Impulse einzutakten. Die Anzahl der Impulse im Zustand (402) soll im Folgenden ein Maß für die einzigartige Adresse jedes einzelnen Schnittstellen-ICs (300-1 bis 300-n) im Gesamtsystem nach Fig. 1 sein. Beispielsweise kann bei einem Zyklus zur Verringerung und wiederum Erhöhung der Spannung Vdd um δV (406) der erste Schnittstellen-IC (300-1) ausgewählt werden, bei zwei Impulsen der Schnittstellen-IC (300-2), und so weiter. In einer bevorzugten Ausführung ist jedes Schnittstellen-IC (300) mit einem Schiebe- oder Zählregister (331) ausgestattet, welches seinen Wert bei jedem Impuls im Zustand 402 um einen Wert ändert. Dieser Wert bleibt in dem weiteren Zustand (403) konstant, kann aber bei Rückkehr in den Zustand (402) durch einen Impuls entsprechend um einen Wert verändert werden. Hierdurch genügt ein weiterer Impuls im Zustand (402), um das nächste Schnittstellen-IC auszuwählen. Bevorzugterweise lassen sich im Zustand (401) das Schiebe- und Zählregister (331) aller Chips an den Leitungen (201) und (202) in einen vordefinierten Zustand bringen. Durch Vergleich des Wertes in dem Schiebe- oder Zählregister (331) mit einem in einem Adress-Vergleichsfeld (332) einprogrammierten Wert kann bei Gleichheit ein Ausgang Chipselect (333) aktiviert werden, der den Schnittstellen-IC (300) aktiv schaltet und ein nachgelagertes Schaltregister (340) aktiviert. Das Wert des Adress-Vergleichsfeld kann bei der Herstellung des Chips festgelegt sein, oder durch benutzerspezifische Aktionen, wie beispielsweise elektrische Programmierung eines EPROM-Feldes, durch Entfernen oder zufügen von elektrischen Kontakten durch Laserablation, Ätzen, Kratzen oder Aufbringen von leitfähigem Stoff oder Ähnlichem eingestellt werden. Bei der hybriden Integration des Schnittstellen-ICs können auch Kontakte des Schnittstellen-ICs (300) dafür genutzt werden, die Adresse von dem Substrat durch unterschiedliche elektrische Verbindungen, z.B. beim Auflöten, zu übernehmen.

Nach der Auswahl des zu adressierenden Schnittstellen-ICs erfolgt die Ansteuerung und Auswertung der Wandler. Hierzu wird in den Zustand (403) gewechselt, der hier beispielsweise durch positive Polarität der Spannung zwischen den Leitungen (201) und (202) gekennzeichnet wird. Durch aufmodulierte Spannungsänderungen δV lassen sich nun Impulse (404) in das Schaltregister (340) des spezifisch ausgewählten ICs (300-i) takten. Jeder Impuls (404) weist eine zeitliche Länge auf, um das Schaltregister (340) um einen Wert zu verändern. Durch die Wertänderung im Schaltregister (340) werden spezifische Konfigurationen der steuerbaren Schalter (341-1 bis 341-m) angesteuert. Hierdurch werden unterschiedliche Wandler (351-1) bis (351-k) aktiviert, und beispielsweise an die Leitungen (201) und (202) geschaltet und somit mit elektrischer Energie versorgt. Im Zustand (405) liegt damit ein spezifischer Wandler (351-i) an den Leitungen an und dessen Impedanz kann in der Steuer- und Messeinheit (100) bestimmt werden. Der Zustand (405) kann bevorzugt zeitlich länger ausgeführt werden, wenn die Wandler sich erst zeitlich stabilisieren müssen, oder kürzer, falls durch Driftprozesse das Messsignal Fehler aufweisen würde. Vorteilhafterweise benötigt ein Schnittstellen-IC mit solchen Adressierungsmodi (402) und (403), wie in den Figuren Fig. 3a, Fig. 3b und Fig. 3c dargestellt ist, keine aktiven Zeitglieder wie Oszillatoren oder Ähnlichem, wodurch die Stromaufnahme und das induzierte Rauschen sehr klein, und damit die Parallelimpedanz zur Messung während des Zustandes (405) extrem groß ist. Weiterhin können durch die Vorgabe der Taktung von außerhalb durch die Steuer- und Messeinheit (100) die zeitlichen Abläufe wandlerspezifisch, auch während des Betriebes des Gesamtsystems, für alle Messstellen und Schnittstellen-ICs (300-1 bis 300-n) exakt angepasst werden.

Nach der Auswahl der gewünschten Anzahl der geschalteten Zustände der Schaltmatrix (340) können alle Schnittstellen-ICs (300-1 bis 300-n) an den Leitungen (201) und (202) wieder in den Zustand (402) zur Auswahl eines weiteren Schnittstellen-ICs (300-i) gebracht werden. Ein weiterer Impuls kann hier genügen, den nächsten spezifischen Schnittstellen-IC (300-i) auszuwählen, oder in den Zustand (401) überzugehen und die Adressierung erneut zu starten.

Eine Möglichkeit solch einen adressierbaren Schnittstellen-IC mittels aufmodulierten, kleinen Spannungsänderungen δV zu steuern und anzusprechen wurde gerade beschrieben. Alternativ kann der Schnitttsellen-IC auch mit konstantem Spannungsbetrag |Vdd| aber unterschiedlicher Polarität der Spannungen auf den Leitungen (201) und (202) nach Fig. 3c betrieben werden. Dies vereinfacht die Funktion zur Konstanthaltung der Versorgungsspannung auf dem Schnittstellen-IC (300). Zur Extraktion der kodierten digitalen Signale kann ein Baustein Polaritätsselektive Impulsweiterleitung (324) dazu dienen, abhängig von der Polarität der Leitungen (201) und (202) den Schnittstellen-IC (300) zu steuern. Über die Polarität und den mitlaufenden Mittelwert V_{Mitte} der anliegenden Spannung können die digitalen Informationen unterschiedlich zugeordnet werden. Hierzu wird der mitlaufende Mittelwert V_{Mitte} durch Tiefpassfiltern erzeugt, wobei kurze Pulse ausgefiltert werden, der mitlaufende Mittelwert V_{Mitte} sich aber in kurzer Zeit an anliegende statische Spannungen anpasst, vgl. Fig. 3c. Liegt z.B. ein positiver Mittelwert V_{Mitte} an Schalter (325) an, so passieren kurze digitale Impulse diesen Schalter. Bei negativem Mittelwert Mitte werden diese geblockt. Schalter (326) verhält sich umgekehrt: ist der Mittelwert am Gate negativ, so passieren schnelle digitale Impulse den Schalter, ist der Mittelwert positiv, so werden diese geblockt. Es gibt für diesen Funktionsblock (324) zahlreiche technische Realisierungsmöglichkeiten, weshalb hier nur die schematische Darstellung gewählt wurde. Die Funktion kann auf den Schnittstellen-IC (300) beispielsweise so angewendet werden, dass bei negativem Mittelwert V_{Mitte} mittels positiven Pulsen (508) der Ausgang von Schalter (326) das Schiebe- oder Zählregister (331) zur Chipadressierung weiterschaltet. Bei positivem Mittelwert V_{Mitte} kann der Ausgang von Schalter (325) mit negativen Pulsen (504) das Schaltregisters (340) weiterschalten, vorausgesetzt natürlich, der Wert im Schiebe- oder Zählregister (331) entspricht dem des Adress-Vergleichsfeldes (332) wodurch der Chipselect (333) gesetzt ist. Die Fig. 3c zeigt einen Ablauf, wie die Adressierung (330) und Programmierung der Schaltmatrix (340) angesteuert werden kann.

Ein beispielhafter, alternativer Ablauf zur Auswertung mehrerer Messstellen an zwei Schnittstellen-ICs (300-1 und 300-2) nach Fig. 1 soll im Folgenden beschrieben werden. Es soll zur Verdeutlichung die polaritätssensitive Impulsweiterleitung (324) mit den Schaltern (325) und (326) nach Fig. 4 genutzt werden. Der Ausgang von Schalter (326) schaltet hierbei das Schiebe- oder Zählregister (331) zur Chipadressierung weiter, der Ausgang von Schalter (325) ist zur Weiterschaltung des Schaltregisters (340) mit diesem gekoppelt.

Die Spannung zwischen Leitung (201) und Leitung (202) beträgt 0V zum Startzeitpunkt (501). Die Spannung wird von 0V auf-Vdd im Übergangszustand (506) verringert. Dadurch werden die Schnittstellen-ICs (300-1 bis 300-n) in ihre Startkonfiguration gebracht. Die Spannung -Vdd kann im Folgenden durch kurze Pulse (508) auf +Vdd gezogen werden. Die Versorgungsspannung bleibt auf dem Chip aufgrund der Gleichrichtungseinheit (311) positiv. Die kurzen Impulse passieren aber aufgrund des sich zwischenzeitlich negativ eingestellten Mittelwertes V_{Mitte} in Fig. 4 den Schalter (326) und werden in das Schiebe- oder Zählregister (331) getaktet. In diesem Schiebe- oder Zählregister (331) werden die Werte bei jedem Impuls um eins verändert bzw. weitergeschoben. Der Wert des Registers wird mit dem Adressvergleichsfeld (332) verglichen. Entspricht der Wert im Schiebe- oder Zählregister (331) dem festgelegten Wert im Adressvergleichsfeld (332) wird der Ausgang Chipselect (333) aktiviert. Wird jetzt ebenso mit positivem Mittelwert aber negativen Impulsen (504) auf den Leitungen (201) und (202) weitergetaktet, wird der Schnittstellen-IC (300-1) wieder deaktiviert und der nächste mit passendem Adresscode, beispielsweise Schnittstellen-IC (300-2), aktiviert.

Es soll aber jetzt davon ausgegangen werden, dass Schnittstellen-IC (300-1) aktiviert ist und ein Wandler vermessen werden soll. Es erfolgt dann im Übergangszustand (507) eine Umkehrung der Polarität des Mittelwertes auf hin zu +Vdd zwischen Leitung (201) und Leitung (202). Der zeitliche Übergang muss mit der polaritätsselektiven Impulsweiterleitung (321) abgestimmt sein, entweder durch einen langsamen Spannungswechsel (507) oder durch die Aktivierung des Schnittstellen-ICs mit dem Wechsel zu positivem Mittelwert als letzten Impuls (508) für die Aktivierung des Chipselect-Ausgangs (333), wobei Letzteres zeitlich effizienter ist. Ist die Spannung V_{Mitte} auf nahezu die vollständige positive Spannung Vdd angewachsen, können negative Impulse (504) zwischen Leitung (201) und Leitung (202) den Schalter (325) passieren und direkt in das Schaltregister (340) getaktet werden. Jeder Impuls (503) von +Vdd nach -Vdd und wieder zurück zu +Vdd schaltet hier das Schaltregister (340) um eine Stelle weiter. Damit werden durch Impulse nacheinander alle Wandler (351-1, 351-2, bis 351-k), die an dem Schnittstellen-IC (301-1) anliegen, einzeln an die Leitungen (201) und (202) an- und wieder abgekoppelt.

Bevor die erste Messstelle aktiviert wird, kann im Steuer- und Messsystem (100) der Ruhe-Stromverbrauch auf den Leitungen (201) und (202) und in den Schnittstellen-ICs (300-1 bis 300-n) bestimmt werden, um die später gemessene Impedanz um den Wert des Eigenverbrauchs des Systems zu korrigieren.

Nach dem ersten negativen Impuls (504) im Zustand (503) wird der Wert des Schaltregisters (340) um 1 verschoben bzw. geändert. Es können jetzt die Leitungen (201) und (202) mittels eines Schalters (341-1), der im Vergleich zu den anderen Schaltern (341-2 bis 341-m) identische Eigenschaften aufweist oder im Vergleich stärker ausgelegt ist, kurzgeschlossen werden. Hierdurch kann die Impedanz der Leitungen (201) und (202) und der Messstellenschalter (341-1 bis 341-m) bestimmt werden und von dem in den folgenden Schritten in der Mess- und Steuereinheit (100) errechneten Wert an den Messstellen abgezogen werden, der Messwert also zusätzlich um die Leitungs- und Schalterimpedanz korrigiert werden. Die endliche Leitfähigkeit der Halbleiterschalter (341) verhindert hierbei zusammen mit Spannungsnachführung im Mess- und Steuersystem (100) einen Spannungsabfall auf den Leitungen (201) und (202). Weiterhin verhindert die Energieversorgungseinheit (310), die im einfachsten Fall nur aus einer Diode und einem Kondensator besteht, dass der kurzzeitige Kurzschluss auf den Leitungen zu Spannungsausfällen auf den Schnittstellen-ICs (301-1) bis (300-n) führen kann. Im Nachfolgenden wird dann jede Messstelle ausgewertet, indem ein negatives Signal (504) über die Leitungen (201) und (202) gepulst wird. Nach Stabilisierung der Spannung zwischen der Leitung (201) und (202) erfolgt die Messung der Impedanz an der ausgewählten Messstelle im Zustand (505).

Nach erfolgter Messung wird die Spannung zwischen Leitung (201) und (202) im Übergangszustand (506) wieder auf negativen Mittelwert gebracht und der nächste Schnittstellen-IC über positive Pulse (508) ausgewählt. Auf dem nächsten Schnittstellen-IC (300-2) erfolgt die Auswertung der Messstellen analog zum vorher beschriebenen Prinzip.

Es ist mit kleinen schaltungstechnischen Ergänzungen auf dem Schnittstellen-IC die beschriebene Adressierung über die Anzahl von Impulsen (508) mittels Polaritätssensitiver Impulsweiterleitung (324) auch relativ einfach durch eine Zahlrepräsentation im dualen System zu ersetzen, ohne integrierte Oszillatoren verwenden zu müssen. Hierbei kann beispielsweise ein negativer Impuls (504) bei positivem Mitlaufendem Mittelwert (V_{Mitte}) einer digitalen 0 entsprechen, ein positiver Impuls (502) bei negativem Mitlaufendem Mittelwert (V_{Mitte}) als digitale 1 interpretiert werden, oder umgekehrt. Die Figur 5 gibt hier nur eine mögliche Repräsentation der Zahlen an.

Es ist klar ersichtlich, dass die vorgeschlagenen Lösungen nach Anspruch 1 auch mit anderen Bauteilen als den hier beschriebenen möglich ist, dass das Protokoll mit anderen Spannungswerten, invertierter Logik, anderem Timing und unterschiedlich angeordneten Strukturen arbeiten kann oder anstatt der Übermittlung von bestimmten Anzahlen von Impulsen eine andere Zahlrepräsentation gewählt wird. Die Beschreibung dient der Verdeutlichung verschiedener Funktionsweisen und offenbart von uns technisch umgesetzte Lösungen zum Bau der Schnittstellen-ICs nach Anspruch 1.

In einer bevorzugten Ausführung weist jedes Schnittstellen-IC (300) noch einen besonders hochohmigen und einen besonders niederohmigen Zustand auf, wobei diese Zustände beispielsweise auch über das Schaltregister (340) ausgewählt werden können. Der hochohmige Zustand kann dazu verwendet werden, den Stromverbrauch aller Schnittstellen-ICs (300-1 bis 300-n) an den Leitungen (201) und (202) sowie den Leckstrom insgesamt zu bestimmen. Der niederohmige Zustand kann dazu verwendet werden, um die temperaturabhängige Leitungsimpedanz und der Impedanz der Schalter zur Messstellenaktivierung (341-1 bis 341-m) zu bestimmen.

Eine besondere Funktionsweise zur Auswertung soll noch anhand einer Halbbrücke mit Zusatzleitung erfolgen. Hierbei werden dieselben Schnittstellen-ICs (300) eingesetzt. Es sind allerdings weitere Kontakte vorhanden, um neben den zwei Leitungen (201) und (202) noch weitere Hilfsleitungen zu- und abschalten zu können. Diese Hilfsleitungen werden ebenso über das Schaltregister (340) gesteuert.

In einer besonderen Arbeitsweise kann ein Schnittstellen-IC (300) auch so verwendet werden, dass der ausgewählte Wandler (351-i) kurzzeitig aus der Energiespeicherkomponente (312) zur kurzzeitigen Energiespeicherung, wie beispielsweise einem Kondensator betrieben, und simultan das Messsignal des Wandlers, beispielsweise die Brückenspannungen einer Wheastonebrücke, kurzzeitig auf die Leitungen (201) und (202) gelegt wird. Damit ist auch die Auswertung von Voll- und Halbbrücken an nur zwei elektrischen Leitungen (201) und (202) möglich. Da sich der AusgangsSignalpegel dieser Wandler in der Regel weit unter dem Betrag der Versorgungsspannung Vdd befindet, sind die Schnittstellen-ICs (300-1 bis 300-n) in der Regel durch Dioden in der Energieversorgungseinheit (310) von den Leitungen (201) und (202) getrennt. So können die niedrigen Spannungspegel der Messsignale über die Leitungen (201) und (202) transportiert werden und in der Steuer- und Messeinheit (100) ausgewertet werden, ohne die Schnittstellen-ICs (300-1 bis 300-n) aktiv von den Leitungen (201) und (201) trennen zu müssen. Die Steuer- und Messeinheit bietet zur Auswertung dieser speziellen Messsignale kurzzeitig einen besonders hochohmigen Zustand an, in dem die Spannungen auf den Leitungen (201) und (202) erfasst werden. Bevorzugterweise weist die Steuer- und Messeinheit (100) Anschlüsse für elektrischen Schilde und Guard-Flächen auf. Letztere werden aktiv von der Steuer- und Messeinheit (100) auf das Potential der Leitungen (201) und / oder (202) geregelt, um die komplexe Leitungsimpedanz und die Leckströme zu verringern.

Alternativ kann aber die Messung noch perfektioniert werden, indem sich alle Schnittstelleneinheiten während der Messungen der Wandler (351-1 bis 351-k) immer kurzfristig komplett von den Leitungen (201) und (202) aktiv trennen, und so noch weniger Einfluss auf den Messwert nehmen, wie dies über zeitgesteuerte Schalter (313) und (314) in Fig. 4 dargestellt ist. In der kurzen Zeitphase, in der der Schnittstellen-IC von den Leitungen (201) und (202) getrennt ist, kann der Schnittstellen-IC (300) aus der Energiespeicherkomponente (312) versorgt werden. Alternativ können die zeitgesteuerten Schalter (313) so ausgelegt sein, dass sie standardmäßig in einen leitenden Zustand übergehen, wenn die Versorgungsspannung auf dem Schnittstellen-IC abnimmt, und so die zeitgesteuerten Schalter nicht extra angeschaltet werden müssen.

Neben den Verdeutlichungen der Kontaktierung von Wandlern in Fig. 4 soll weiterhin nicht ausgeschlossen werden, dass das durch das Schaltregister (340) aktivierte Schaltbild von Schaltern (401-1 bis 40-m) nicht auch komplexere Verschaltungen zulässt. Zum Beispiel ist für neuartige Messaufgaben die temporäre, veränderliche Verschaltung einzelner Widerstände zu Spannungsteilern oder Wheatstonebrücken, die Zuschaltung weiterer Komponenten wie Kondensatoren oder Induktivitäten, das Zuschalten von Abstimmwiderständen, das Kontaktieren von Resonatoren, usw. von großem Interesse, um mit wenig Wandlerelementen komplexe Messaufgaben durchzuführen. Hierzu zählt auch, wie vorher schon beschrieben, das Umkontaktieren der Leitungen (201) und (202) an den Aus- oder Eingang weiterer Komponenten. Im Speziellen kann hier auch die Spannung der Energiespeicherkomponente zur kurzzeitigen Energiespeicherung (312) an die Leitungen (201) und (202) gelegt werden, wenn diese durch die Steuer- und Messeinheit (100) hochohmig geschaltet sind. Hierdurch kann die Energiemenge, mit der der Wandler versorgt wurde, über die mittlere Spannung während des Messvorgangs ermittelt werden. Hierdurch kann das Ausgangssignal des Wandlers (351-i) auf die Versorgungsspannung aus dem Energiespeicher (312) bezogen werden und somit die Messgröße exakter erfasst werden. Dies kann notwendig werden, da die Energiespeicherkomponenten zur kurzzeitigen Energiespeicherung (312) nur kleine Energiemengen freigeben können und die Spannung am Energiespeicher (312) mit jeder µs abfällt. Aus der Spannung vor dem Beginn der Messung und nach dem Beginn der Messung kann dieser zeitabhängige, systematische Fehler sehr einfach kompensiert werden. Hierfür soll die Spannung an dem Energiespeicher (312) an die Leitungen (201) und (202) gelegt werden können. Bei genauem Timing der Messfunktionen im Steuer- und Messsystem (100) kann dieser systematische Fehler für Messsaufgaben mit geringeren Anforderungen an die Genauigkeit aber auch rein rechnerisch kompensiert werden.

Die Schnittstellen-ICs (300) sollen für die Versorgung von Wandlern ausgelegt sein. Dies ermöglicht eine einfache Integration, Ansteuerung und Auswertung von Aktoren und Sensoren. Auch die Steuerung und Auswertung von optischen Bauteilen ist einfach möglich.

Die Figur 6 zeigt einen möglichen Aufbau eines zukünftigen Führungsdrahtes (700) für Katheterisierungen, beispielsweise des Herzens. In den Führungsdraht sind vier wichtige Sensoren (701), (702), (703) und (704) und ein Aktor (705) integriert. Jeder Sensor weist einen eigenen Schnittstellen-IC (300-1) bis (300-4) auf.

Über den Momentsensor (701) können drei Drehmomentkomponenten erfasst werden. Hierzu werden beispielsweise sechs Messsignale des Momentensensors (701) über den Schnittstellen-IC (301-1) an die Mess- und Steuereinheit gesendet, in der aus den sechs einzelnen Messsignalen der dreikomponentige Momentenvektor errechnet wird.

Auf einem weiteren Schnittstellen-IC (300-2) ist ein Mikro-Drucksensor (702) monolithisch integriert. Der Schnittstellen-IC (300-2) ermöglicht die Druckmessung temperaturkompensiert über eine volle Wheatstonebrücke über nur zwei elektrische Kontakte. Trotzdem kann die Temperatur des Blutes mit dem Sensor erfasst werden, indem die piezoresistiven Widerstände durch Schalter umkonfiguriert werden, oder einfach die Impedanz der Sensorversorgungszweigs ausgewertet wird. Über die Temperaturverteilung von in das menschliche Herz injizierter Flüssigkeiten ist die Pumpleistung errechenbar.

Neben diesen Größen ist es auch möglich, Signale von Elektroden (303) im Herzen über das Schnittstellen-IC (300-3) auszuwerten oder diese Elektroden selektiv über das Schnittstellen-IC (300-3) zu bestromen und so das Herz zu erregen.

Es können weitere Sensoren in den Führungsdraht (700) integriert werden, beispielsweise ein Kraftsensor (704) nach WO2008/000246, um den vollen Kraftvektor über mehrere Messwerte zu bestimmen.

Weiterhin kann, was in Fig. 6 nicht dargestellt ist, über Widerstandsauswertung oder mithilfe eines optischen Sensors der Sauerstoffgehalt in den Herzkranzgefäßen bestimmt werden. Weitere bekannte, aber in dieser Kombination aus Platzgründen derzeit nicht integrierbaren Sensoren sind zusätzliche Ultraschalldopplersensoren für eine Flussgeschwindigkeitsmesssung oder zur Bildgebung. Diese Integration vieler Wandler kann durch den Schnittstellen-IC (300) nach Anspruch 1 vereinfacht werden. Neben Sensoren können auch Aktoren (705) in einen Führungsdraht (700) integriert und diese über den Schnittstellen-IC (300-5) angesteuert werden, um den Draht (700), beispielsweise über den Memoryeffekt mittels Nickel-Titan-Draht-Aktoren, mechanisch zu steuern. Weitere Anwendungen, die die Erfindung nach Anspruch 1 vereinfachen kann, ist die Integration von Aktoren (705) um mittels Bohren, Abschaben oder Fräsen oder Ähnlichem Ablagerungen in den Herzkranzgefäßen zu beseitigen. Um Aktoren beliebig Ansteuern zu können, ist eine flexible Gestaltung der analogen Spannungen auf den Leitungen (201) und (202) wünschenswert. Es ist hierbei möglich, den Schnittstellen-IC (300) für besonders niedrige Versorgungsspannungen auszulegen, zum Schutz gegen höhere Spannungen einen aktiven Spannungsregler in der Energieversorgungseinheit (310) vorzusehen dessen Eingangsbereich für die maximale Versorgungsspannung der Aktoren geeignet ist. Günstiger ist es aber, den Schnittstellen-IC mit biplorarer Versorgung zu betreiben und zur Gewinnung der Versorgungsspannung auf dem Schnittstellen-IC (300) über eine Gleichrichtungseinheit (311) in eine konstante Versorgungsspannung zu wandeln und somit das Schnittstellen-IC mit dem Betrag der Spannung zwischen den Leitern (201) und (202) zu versorgen, die Aktoren aber mit dem Mittelwert der Versorgungsspannung zu versorgen. Dadurch lassen sich verschiedene Spannungspegel am Aktor sehr flexibel einstellen. Es müssen natürlich die Funktionsblöcke Energieversorgungseinheit (300), Signalextraktionseinheit (320) und die Mittelwertbildung im Aktor in Ihrem Zeitverhalten so aufeinander abgestimmt sein, dass sie sich nicht gegenseitig stören und trotzdem gute Leistung ermöglichen. Es ist alternativ auch möglich, das Schnittstellen-IC kurzzeitig von den Leitungen (201) und (202) zu trennen, und in dieser Zeit den Aktor mit willkürlichem Spannungspegel zu versorgen. Diese sehr einfach zu realisierenden verschiedenen Versorgungsspannungen für die Aktoren lassen sich aber ebenso bei aktiven Sensoren, also bei Wandler allgemein, anwenden.

Die Figur 7 zeigt eine beispielhafte Verkabelung der vielen Schnittstellen-ICs (300) im Führungsdraht (700). Hierbei werden nur zwei elektrische Kontakte benötigt, um alle Wandler anzusteuern und auszulesen. Damit ist auch nur ein Stecker mit zwei Kontakten erforderlich. Im Führungsdraht (700) können auch schon vorhandene, elektrisch leitfähige Komponenten wie die Feder, die Seele der das Sicherungsband teilweise oder voll genutzt werden. Dies öffnet den Weg für günstige, neuartige, hochwertige Instrumente, nicht nur bei Katheterisierungen. Die Anwendung des Schnittstellen-ICs (300) ist aber gerade in Führungsdrähten, Kathetern, Endoskopen und weiteren Instrumenten der interventionellen und miniamalinvasiven Chirurgie sinnvoll.

Je nach Anwendung, kann der Schnittstellen-IC (300) monolithisch mit den Wandlern verbunden werden, bzw. der Wandler auf demselben Schnittstellen-IC (300) aufgebaut werden. Dies ermöglicht beispielsweise extrem kleine Siliziumsensoren zur Messungen verschiedener Größen.

Eine weitere Ausführung des Schnittstellen-ICs (300) nach Anspruch 1 sieht alternativ elektrische Kontakte vor, mit denen der Schnittstellen-IC (300) einfach in Hybridbauweise an vorhandene Wandler angekoppelt werden kann. Hier sind beispielsweise Flip-Chip Kontakte zum Löten oder Kleben, oder Bond-, Steck-, oder Schweißkontakte, ja nach Anwendung, anbringbar. Die Figur 8 zeigt einen Dehnungsmesstreifen (DMS), auf dem der Schnittstellen-IC (300) in Hybridbauweise auf dem DMS-Wandler direkt integriert ist. Es lässt sich hier der Spannungsteiler über nur zwei Leitungen (201) und (202) auswerten, normalerweise sind hierfür drei bis fünf Leiter notwendig. Alternativ kann der DMS im Steuer- und Messsystem (100) kurzzeitig und vorübergehend zu einer Halbbrücke verschaltet und ausgewertet werden. Zur Steigerung der Messperformance ist ein zusätzlicher Kondensator (312) in hybridbauweise am Schnittstellen-IC (300) integriert. In dieser Figur 8 soll der DMS, der natürlich auch als integrierter Halbleiter-DMS oder monolithischer Dehnmesschip mit externem Energiespeicher (312) ausgeführt sein kann, nur als ein Beispiel einer Vielzahl möglicher anderer Wandler dienen. In der Beschreibung kann hier nicht auf alle möglichen Anwendungsfelder eingegangen werden. Es soll aber noch deutlcih darauf hingewiesen werden, dass mit dem Schnittstellen-IC (300) und dem Steuer- und Messsystem (100) nach Anspruch 1 auch digitale Wandler angesteuert werden. Diese können schon eine Signalvorverarbeitung integriert haben. So lassen sich auch digitale Sensoren auslesen und ansteuern. Es ist dann darauf zu achten, dass die digitale Signalkodierung zwischen Wandler (351-i) und dem Steuer- und Messsystem (100) nicht die Kommunikation zwischen Steuer- und Messeinheit (100) und den Schnittstellen-ICs (301-300-n) stört. Hierzu können andere Pulsfrequenzen oder andere Spannungspegel zwischen den Leitungen (201) und (202) gewählt werden für die Modulation genutzt werden.

Für die am häufigsten angewendeten Wandlerprinzipien stellt eine Speisung mit vorgegebener Spannung die einfachste Betriebsweise dar. Es ist aber auch möglich, die Schnittstellen-ICs (300-1 bis 300-n) mit Konstantstrom zu betreiben. Hierzu kann die Energieversorgungseinheit beispielhaft einen Strom-Spannungswandler beherbergen, um die weiteren Funktionsbausteine auf dem Schnittstellen-IC (300) aus dem elektrischen Strom mit angepasster elektrischer Spannung zu versorgen. In dieser Art ist es auch möglich, die Steuer- und Messeinheit (100) und die Schnittstellen-ICs (300-1 bis 300-n) in Serie zu schalten. Es sind dann sowohl Reihen- oder Parallelschaltungen, als auch Reihen und Parallelschaltung der Schnittstellen-ICs (300-1 bis 300-n) untereinander und mit der Mess- und Steuereinheit (100) realisierbar. Eine Parallel-Serienanordnung ist in Fig. 9 dargestellt.

Es lassen sich Vorteilhaft die Funktionen der Steuer- und Messeinheit (100) mit digitalen und analogen Komponenten realisieren, die auf und an Mikrocontrollern heutzutage schon integriert werden. Es durch den Aufbau der Steuer- und Messeinheit (100) mit Mikrocontrollerkomponenten möglich, mehrere komplette Messsysteme nach Fig. 1, also mehrere Steuer- und Messeinheiten (100) mit wiederum mehreren Schnittstellen-ICs (300-1 bis 300-n), zusammenzufassen und dann auf weitere Art zu vernetzen, beispielsweise über digitale Übertragungssysteme wie Bluetooth, Wireless-Lan, Zig-Bee, oder Ähnlichem.

Eine weitere bevorzugte Anwendung kann der Schnittstellen-IC (300) nach Anspruch 1 vor allem in Strukturuntersuchungen finden, wo es in der Vermessung der Dehnungen und Lasten in Verkehrsmitteln wie Flugzeugen, Bahnen, Automobilen, aber auch in Fertigungsmaschinen und Prototypen, aber auch in Gebäuden wie Brücken oder Häusern, eingesetzt wird. Hier sind Kombinationen von Dehnungs-, Positions-, Temperatur und Schwingungssensoren günstig einsetzbar.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

So ist eine Reihen- oder/und Parallelschaltung mehrerer des in Anspruch 1 dargestellten Gegenstandes z.B. für die Vermessung der Auslenkung oder der Beanspruchung von Flugzeugflügeln bei Auslenkung von Vorteil.

### Bezugszeichenliste

- 100: Steuer- und Messsystem
- 101: steuerbare Quelle G
- 102: Spannungsmessfunktion V
- 103: Strommessfunktion A

- Vdd: Versorgungsspannung des Schnittstellen-ICs
- δV: Kleine, definierte Spannungsänderungen
- VMitte: Mitlaufender Mittelwert der Spannungen auf den Leitungen (201) und (202)

- 201: Elektrische Hinleitung
- 202: Elektrische Rückleitung
- 203: Elektrische Hilfsleitung
- 204: Elektrische Hilfsleitung
- 205: Gemeinsamer Massekontakt

- (300): Schnittstellen-IC allgemein, umfasst alle oder einzelne Chips 300-1...300-n
- 300-1...300-n: Mehrere Schnittstellen-ICs, Nummer 1 bis Nummer n
- n: ganzzahlige, natürlich Zahl
- 300-i: Der eine, spezifische Schnittstellen-IC im Kontext
- i: ganzzahlige, natürliche Zahl
- 310: Energieversorgungseinheit
- 311: Gleichrichtungseinheit
- 312: Energiespeicherkomponente zur kurzzeitigen Energiespeicherung
- 313: Erster Schalter zum Trennen der Energieversorgung von den Leitungen
- 314: Zweiter Schalter zum Trennen der Energieversorgung von den Leitungen
- 320: Signalextraktionseinheit
- 321: Elektrischer Spannungsteiler
- 322: Vergleicher und Verstärker
- 324: Polaritätssensitive Impulsweiterleitung
- 325: Schalter, der bei positivem Mittelwert negative Impulse passieren lässt
- 326: Schalter, der bei negativem Mittelwert positive Impulse passieren lässt
- 321: Polaritätsselektive Impulsweiterleitung
- 330: Chip-Adressierung und Aktivierung
- 331: Schiebe- oder Zählregister
- 332: Adress-Vergleichsfeld
- 333: Chipselect, Aktivierung des Schaltregisters (340)
- 340: Schaltregister
- 341-1...341-m: Mehrere steuerbare Schalter, Nummer 1 bis Nummer m
- 343-i: Der eine spezifische steuerbare Schalter i im Kontext
- 350: Wandleranschlüsse
- 351: Wandler allgemein, also Sensor, Aktor oder Messwandler
- 351-1...351-k: Mehrere Wandler, Nummer 1 bis Nummer k
- 351-1: Kurzschluss zur Messung der Leitungsimpedanz
- 351-2: Resistiver Wandler
- 352-3: Kapazitiver Wandler
- 353-4: Induktiver Wandler
- 353-5: Wandler mit Vollbrückenstruktur
- 353-i: Der eine spezifische Wandler i im Kontext

- 401: Reset der Schnittstellen-ICs
- 402: Auswahl der Schnittstellen-ICs
- 403: Phase zur Auswahl und Vermessung der Wandler
- 404: Adressierung eines Wandlers
- 405: Bestromen und Vermessen des selektierten Wandlers
- 406: Adressierung eines Schnittstellen-ICs (300-i)

- 501: Reset der Schnittstellen-ICs
- 502: Adressierung der Schnittstellen-ICs (300-1 bis (300-n)
- 503: Adressierung des Schaltregisters (340)
- 504: Negative Pulse bei positivem VMitte
- 505: Bestromen und Vermessen des selektierten Wandlers
- 506: Übergangszustand zu negativem Mittelwert VMitte
- 507: Übergangszustand zu positivem Mittelwert VMitte
- 508: Positive Pulse bei negativem VMitte

- 600: Dehnungsmessstreifen mit Träger und Substrat
- 601: Messbereich des Dehnungsmessstreifen

- 700: Führungsdraht
- 701: Momentensensor
- 702: Kombinierter Druck- und Temperatursensor
- 703: Elektrode
- 704: Kraftsensor
- 705: Aktor

## Patentansprüche

1. Schnittstellen-IC (300) zur elektrisch leitenden Verbindung von mindestens einem Wandler (351-i) über den IC und entweder einer Hin- und Rückleitung (201, 202) oder über eine Hin-Leitung (201, 202) und einen gemeinsamen Massekontakt (205) mit einer Steuer-/Messeinheit (100), **dadurch gekennzeichnet, dass** dieser IC umfasst,
- mindestens einen Funktionsblock Energieversorgungseinheit (310) zur Trennung der Energie von den Signalen auf den Leitungen (201) und (202) bzw. (201) und (205) und / oder zur Konditionierung der elektrischen Energie für des Schnittstellen-ICs (300-i) und / oder der Sensoren 351-1 bis -6,
- mindestens einen Funktionsblock Signalextraktionseinheit (320) zur Trennung der Signale von der Energie auf den Leitungen (201) und (202) bzw. (201) und (205) und / oder zur Konditionierung der digitalen Signale für das Schnittstellen-IC ) und / oder der Sensoren 351-1 bis - 6,
- mindestens ein Schiebe-/Zählregister (331) zur Adressierung Auswahl eines Schnittstellen-ICs (300-i) an den Leitungen (201) und (202) bzw (201) und (205),
- mindestens ein Adress-Vergleichsfeld (332) zur Chipadressierung,
- mindestens ein Schaltregister (340), welches durch die digitalen Informationen seinen Wert ändert und Ausgänge schaltet,
- mindestens einen steuerbaren Schalter (341-1 bis -m), der durch Ausgänge des Schaltregisters (340) aktiviert und deaktiviert werden kann,
- mindestens einen Wandler (351-1 bis -6), der durch die Schalter (341-1 bis ― m) selektiv mit den Leitungen (201, 202) oder dem gemeinsamen Massekontakt (205) elektrisch verbunden werden kann.

2. Mess- und Ansteuerungssystem zur Messung von elektrischen Größen, wie Strom- oder/und Spannung von angeschlossenen Wandlern und zur Ansteuerung von Wandlern in der Form von Aktuatoren und Sensoren, umfassend
- eine Steuer-/Messeinheit (100), die zur Erzeugung und/oder Messung digitaler und/oder analoger elektrischer Spannungen ausgeführt ist,
- welche über einen elektrische Hin-Leiter (201) und einen gemeinsamen Rück-Leiter (202) oder über einen elektrischen Hin-Leiter (201) und einen gemeinsamen Massekontakt (205) zu mindestens einem Schnittstellen-IC (300-i) gemäß Anspruch 1) und von dem mindestens einem Schnittstellen-IC (300-i) gemäß Anspruch 1) zurück geleitet werden.

3. Mess- und Ansteuerungssystem nach Anspruch 2, **dadurch gekennzeichnet, dass**, das die Elemente des mindestens Schnittstellen-ICs (300-i), bis auf die Wandler, jeweils nur einfach ausgeführt sind

4. Mess- und Ansteuerungssystem nach Anspruch 2 bis 3, **dadurch gekennzeichnet, dass**, das Schiebe- oder Zählregister (331) mit dem Schaltregister (340) kombiniert ausgeführt ist oder/und die Energieversorgungseinheit (310) und/oder die Signalextraktionseinheit (320) als eine eindotierte Diode ausgeführt ist.

5. System nach Anspruch 2 bis 4, **dadurch gekennzeichnet, dass** auf dem mindestens einen Schnittstellen-IC (300-i) alle elektrischen Zustände konstant bleiben bzw. gegen einen festen Zustand konvergieren, solange auf den Leitungen (201) und (202) keine Änderung vorgegeben wird.

6. System nach Anspruch 2 bis 5, **dadurch gekennzeichnet, dass** der Schnittstellen-IC (300-i) einen einfachen Oszillator zur Kommunikation mit dem Steuer- und Messsystem (100) oder zum zeitgesteuerten Ablauf von Funktionen auf dem Schnittstellen-IC (300-i) aufweist.

7. System nach Anspruch 2 bis 6, **dadurch gekennzeichnet, dass** die Versorgung des IC (300-i) durch bipolare elektrische Spannung erfolgt und der Wechsel der Polarität mindestens einen Teil der Signalkodierung enthält.

8. System nach Anspruch 2 bis 7, **dadurch gekennzeichnet, dass** die Versorgung des IC (300-i) durch bipolare elektrische Spannung erfolgt, wobei der Wechsel der Polarität mindestens einen Teil der Signalkodierung enthält, **dadurch gekennzeichnet, dass** die digitale Signalkodierung in Abhängigkeit des mitlaufenden Mittelwertes (V_{Mitte}) der Spannungen auf den Leitungen (201) und (202) unterschiedlich interpretiert bzw. verarbeitet wird.

9. System nach Anspruch 2 bis 8, **dadurch gekennzeichnet, dass** neben einer Hauptleitung (201) und einer weiteren Leitung (202) optional weitere Hilfsleitungen (203) und / oder (204) usw. vorhanden sind, die eine exaktere Auswertung analoger Größen über eine elektrische Verschaltung, beispielsweise durch Ausgabe einer Brückenspannung von einer Wheatstonebrücke auf eine Hilfsleitung (203), ermöglichen.

10. System nach Anspruch 2 bis 9, **dadurch gekennzeichnet, dass** es Zustände aufweist, in dem die komplexe elektrische Impedanz der Schnittstellen-ICs (300-1 bis 300-n), der elektrischen Zuleitungen (201) und (202), oder der steuerbaren Schalter (341-1 bis 341-m) oder der angeschlossenen Wandler (351-1 bis 351-k) in der Steuer- und Messeeinheit gemessen werden kann, beispielsweise durch Abtrennen der Wandler (351-1bis 351-k) oder durch "Kurzschließen" der Leitungen (201) und (202) oder durch Verbinden der Wandler (351-1 bis 351-k) mit den Leitungen (201) und (202).

11. System nach Anspruch 2 bis 10, **dadurch gekennzeichnet, dass** es Elemente (310) zur Stabilisierung, oder Abtrennung und Pufferung der elektrischen Versorgung auf dem Schnittstellen-IC (300) aufweist, um die Versorgung der Wandler (351-1 bis 351-k mit unterschiedlichen elektrischen Größen zu erlauben, indem die elektrischen Größen durch das Steuer- und Messsystem (100) variabel angepasst werden, beispielsweise durch einen unterschiedlichen Tastgrad zwischen positiver und negativer Versorgungsspannung zwischen den Leitungen (201) und (2029, durch Pulsweitenmodulation, unterschiedliche Spannungspegel, et cetera, ohne die Funktion des Schnittstellen-ICs (300) massiv zu beeinträchtigen.

12. System nach Anspruch 2 bis 11, **dadurch gekennzeichnet, dass** es mindestens eine Energiespeicherkomponente (312) zur kurzzeitigen Speicherung elektrischer Energie auf dem Chip aufweist oder das mindestens eine Energiespeicherkomponente (312) zur kurzzeitigen Energiespeicherung extern am Schnittstellen-IC (300) kontaktiert werden kann, die dazu genutzt wird, kurzzeitig mindestens einen Wandler (351-i) mit Energie aus dem Speicher (312) zu versorgen und während der Energieversorgung des Wandlers (351-i) aus dem Speicher (312) mindestens ein alternativer Anschluss des Wandlers (351-i) vorübergehend an die Leitungen (201) und/oder (202) geschaltet wird.

13. System nach Anspruch 2 bis 12, **dadurch gekennzeichnet, dass** das Schaltregister (340) oder steuerbare Schalter (341-1 bis 341-m) dazu genutzt werden kann, Wandler (353-1 bis 353-m) umzukonfigurieren oder untereinander unterschiedlich zu verschalten.

14. Methode zur Steuerung des Systems nach Anspruch 2 bis 13 mit zeitlich synchronisierter Kommunikation, **dadurch gekennzeichnet, dass** die Frequenz durch den Schnittstellen-IC (300) vorgegeben wird und die Synchronisation des Taktes in dem Steuer- und Messsystem (100) erfolgt.

15. Anwendung des Systems nach Anspruch 2 bis 14 oder des ICs nach Anspruch 1, **dadurch gekennzeichnet**, das es in einem medizintechnischen Gerät eingesetzt ist und die Auswertung sehr vieler Wandler mit hoher Integrationsdichte, beispielsweise in einem Katheter, Führungsdraht, Endoskop oder einem allgemeinen Operationswerkzeug der minimal-invasiven Chirurgie oder es zur Vermessung bei Strukturuntersuchungen mittels Dehnungs-,Auslenkungs, Positions-, Temperatur-, und/oder Schwingungssensoren und ähnlichem, an Verkehrsmitteln wie Flugzeugen, Bahnen, Automobilen, aber auch Gebäuden wie Brücken und Häusern, aber auch an Maschinen und Prototypen eingesetzt wird.
